# EUROPEAN PATENT APPLICATION

(11) **EP 3 644 283 A1**
(43) Date of publication of application: **29.04.2020**
(21) Application number: 19200629.4
(22) Date of filing: 30.09.2019
(51) Int. Cl.: G06T 19/00, B29C 70/30

(54) **AUGMENTED REALITY SYSTEM FOR MANUFACTURING COMPOSITE PARTS**

(30) Priority: 23.10.2018 US 201816167636
(71) Applicant: The Boeing Company, Chicago, IL 60606 (US)
(72) Inventor: LAUGHLIN, Brian Dale, Chicago, IL 60606 (US); SKELTON, Melissa Margaret, Chicago, IL 60606 (US)
(74) Representative: Sandri, Sandro

(57) **Abstract**

A method, apparatus, and system for augmenting a live view (212) of a task location (244). A portable computing device (238) is localized to an object (206). A visualization (242) of a task location (244) is displayed on the live view (212) of the object (206) for performing a task using a model (246) of the object (206) and a combined map (234) of the object (206). The combined map (234) is generated from scans of the object (206) by portable computing devices (214) at different viewpoints (230) to the object (206).

## Description

### Technical Field

The present disclosure relates generally to manufacturing composite parts and in particular, to a method, apparatus, and system for manufacturing composite part using an augmented reality system.

### Background

Composite parts are manufactured by laying up plies of composite material on a tool. The plies can be preimpregnated with a resin prior to placement. These types of plies are referred to as prepreg. After the plies are laid up on the tool, the layers are cured to form a composite part.

Laying up plies in the correct locations, order and orientations specified for the composite part is important to obtain a desired level of performance. Currently, when plies are placed by human operators, the plies are placed on a tool using an overhead laser tracker (OLT) to display a guide for ply placement. This overhead laser tracker increases the accuracy in the placement of the plies on the tool.

An overhead laser tracker comprises a laser projector mounted above the layup area, a computer controller and a set of retroreflective alignment pins or reference markers, which are positioned on the tool and used as reference points to establish the tool position in three-dimensional space. The laser projector displays an outline on the tool that identifies the placement of a ply.

These types of systems are effective but require a dedicated space. For example, the laser projector requires a fixed space above the tool used to layup plies. Further the overhead laser tracker is required to be located above the tool. Additionally, overhead laser trackers are expensive to purchase and also require calibration and other maintenance.

Therefore, it would be desirable to have a method and apparatus that take into account at least some of the issues discussed above, as well as other possible issues. For example, it would be desirable to have a method and apparatus that overcome a technical problem with providing a guide for placing a ply on a tool.

### SUMMARY

An embodiment of the present disclosure provides a method for visualizing task information for a layup location on a tool. A tool is scanned using portable computing devices on human operators at different viewpoints to the tool to generate scan data. Point clouds are created by a computer system from the scan data generated by the portable computing devices. A combined map of the tool is created by the computer system using the point clouds. A portable computing device in the portable computing devices is localized to the tool using the combined map of the tool. The task information for the layup location on the tool is displayed on a live view seen through a display device in the portable computing device that has been localized using the combined map of the tool and a ply model of composite plies, wherein displayed task information augments the live view of the tool.

Another embodiment of the present disclosure provides a method for augmenting a live view of a task location. A portable computing device is localized to an object. A visualization of a task location is displayed on the live view of the object for performing a task using a model of the object and a combined map of the object, wherein the combined map is generated from scans of the object by portable computing devices at different viewpoints to the object.

Yet another embodiment provides an augmented reality system for visualizing a layup location on a tool. The augmented reality system comprises a computer system that operates to receive scan data from portable computing devices on human operators at different viewpoints to the tool to generate scan data. The computer system operates to create a plurality of maps of the tool using the scan data generated by the portable computing devices and combines the plurality of maps to form a combined map of the tool. The computer system operates to identify task information for the layup location in a ply model. The computer system operates to send the task information of the layup location on the tool to a portable computing device in the portable computing devices. The portable computing device displays the task information for the layup location on the tool on a live view seen through a display device in the portable computing device that has been localized using the combined map of the tool and a ply model of composite plies.

Still another embodiment provides an augmented reality system for augmenting a live view of a task location. The augmented reality system comprises a portable computing device, wherein the portable computing device is localized to an object and displays a visualization of a task location on the live view of the object for performing a task using a model of the object and a combined map of the object. The combined map is generated from scans of the object by portable computing devices at different viewpoints to the object.

The features and functions can be achieved independently in various embodiments of the present disclosure or may be combined in yet other embodiments in which further details can be seen with reference to the following description and drawings.

### BRIEF DESCRIPTION OF THE DRAWINGS

The novel features believed characteristic of the illustrative embodiments are set forth in the appended claims. The illustrative embodiments, however, as well as a preferred mode of use, further objectives and features thereof, will best be understood by reference to the following detailed description of an illustrative embodiment of the present disclosure when read in conjunction with the accompanying drawings, wherein:
**Figure 1** is an illustration of a pictorial representation of a network of data processing systems in which illustrative embodiments may be implemented;
**Figure 2** is an illustration of a block diagram of an augmented reality environment in accordance with an illustrative embodiment;
**Figure 3** is an illustration of a block diagram of an augmented reality system used for visualizing task information for placing a composite ply at a layup location on a tool in accordance with an illustrative embodiment;
**Figure 4** is an illustration of human operators performing operations at a tool in accordance with an illustrative embodiment;
**Figure 5** is an illustration of a flowchart of a process for augmenting a live view of a task location on a portable computing device in accordance with an illustrative embodiment;
**Figure 6** is an illustration of flowchart of a process for processing scan data in accordance with an illustrative embodiment;
**Figure 7** is an illustration of a flowchart of a process for creating a combined map in accordance with an illustrative embodiment;
**Figure 8** is an illustration of a flowchart of a process for creating a combined map in accordance with an illustrative embodiment;
**Figure 9** is an illustration of a flowchart of a process for visualizing task information for a layup location on a tool in accordance with an illustrative embodiment;
**Figure 10** is an illustration of a flowchart of a process for displaying a visualization of task information in accordance with an illustrative embodiment;
**Figure 11** is an illustration of a block diagram of a data processing system in accordance with an illustrative embodiment;
**Figure 12** is an illustration of a block diagram of a portable computing device in accordance with an illustrative embodiment;
**Figure 13** is an illustration of a block diagram of an aircraft manufacturing and service method in accordance with an illustrative embodiment;
**Figure 14** is an illustration of a block diagram of an aircraft in which an illustrative embodiment may be implemented; and
**Figure 15** is an illustration of a block diagram of a product management system in accordance with an illustrative embodiment.

### DETAILED DESCRIPTION

The illustrative embodiments recognize and take into account one or more different considerations. For example, the illustrative embodiments recognize and take into account that portable computing devices are to be used in place of an overhead laser tracker to display task locations. The illustrative embodiments recognize and take into account, however, the use of a portable computing device involves the portable computing device localizing itself to the tool. The illustrative embodiments recognize and take in account that identifying the location and orientation of the portable computing device relative to the tool and corresponding the view of the tool to a model of the tool provides challenges not present with an overhead laser tracker. The illustrative embodiments recognize and take in account that generating a map from a portable computing device may not have a desired level of accuracy.

The illustrative embodiments recognize and take into account that the technical solution can involve using scans of the tool from multiple portable computing devices at different viewpoints. Thus, the illustrative embodiments provide a method, apparatus, and system for visualizing information for performing tasks on an object. The illustrative embodiments provide a method, apparatus, and system for visualizing task locations. The visualization of task locations includes displaying information used to perform operations at the task locations in addition to identifying the task locations.

In one illustrative example, a method augments a live view of a task location. A portable computing device is localized to an object. A visualization of a task location is displayed on a live view of the object for performing a task using a model of the object and a combined map of the object, wherein the combined map is generated from scans of the object by portable computing devices at different viewpoints to the object.

In another illustrative example, a method provides visualization of task information for a layup location on a tool. A tool is scanned using portable computing devices on human operators at different viewpoints to the tool to generate scan data. Point clouds are created by a computer system from the scan data generated by the portable computing devices. A combined map of the tool is created by the computer system using the point clouds. A portable computing device in the portable computing devices is localized to the tool using the combined map of the tool. The task information for the layup location on the tool is displayed on a live view seen through a display device in the portable computing device that has been localized using the combined map of the tool and a ply model of composite plies, wherein displayed task information augments the live view of the tool.

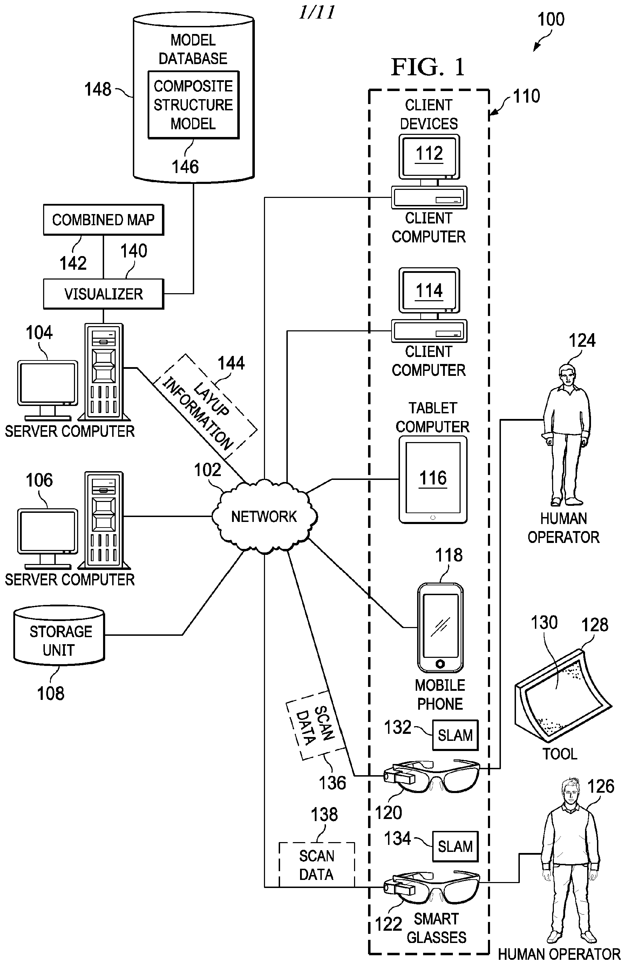

With reference now to the figures and, in particular, with reference to **Figure 1**, an illustration of a pictorial representation of a network of data processing systems is depicted in which illustrative embodiments may be implemented. Network data processing system **100** is a network of computers in which the illustrative embodiments may be implemented. Network data processing system **100** contains network **102,** which is the medium used to provide communications links between various devices and computers connected together within network data processing system **100.** Network **102** may include connections, such as wire, wireless communication links, or fiber optic cables.

In the depicted example, server computer **104** and server computer **106** connect to network **102** along with storage unit **108.** In addition, client devices **110** connect to network **102.** As depicted, client devices **110** include client computer **112** and client computer **114.** Client devices **110** can be, for example, computers, workstations, or network computers. In the depicted example, server computer **104** provides information, such as boot files, operating system images, and applications to client devices **110.** Further, client devices **110** can also include other types of client devices such as tablet computer **116,** mobile phone **118,** smart glasses **120,** and smart glasses **122.** In this illustrative example, server computer **104,** server computer **106,** storage unit **108,** and client devices **110** are network devices that connect to network **102** in which network **102** is the communications media for these network devices. Some or all of client devices **110** may form an Internet of things (IoT) in which these physical devices can connect to network **102** and exchange information with each other over network **102.**

Client devices **110** are clients to server computer **104** and server computer **106** in this example. Network data processing system **100** may include additional server computers, client computers, and other devices not shown. Client devices **110** connect to network **102** utilizing at least one of wired, optical fiber, or wireless connections.

Program code located in network data processing system **100** can be stored on a computer-recordable storage medium and downloaded to a data processing system or other device for use. For example, program code can be stored on a computer-recordable storage medium on server computer **104** and downloaded to client devices **110** over network **102** for use on client devices **110.**

In the depicted example, network data processing system **100** is the Internet with network **102** representing a worldwide collection of networks and gateways that use the Transmission Control Protocol/Internet Protocol (TCP/IP) suite of protocols to communicate with one another. At the heart of the Internet is a backbone of high-speed data communication lines between major nodes or host computers consisting of thousands of commercial, governmental, educational, and other computer systems that route data and messages. Of course, network data processing system **100** also may be implemented using a number of different types of networks. For example, network **102** can be comprised of at least one of the Internet, an intranet, a local area network (LAN), a metropolitan area network (MAN), or a wide area network (WAN). **Figure 1** is intended as an example, and not as an architectural limitation for the different illustrative embodiments.

As used herein, "a number of" when used with reference to items, means one or more items. For example, "a number of different types of networks" is one or more different types of networks.

Further, the phrase "at least one of," when used with a list of items, means different combinations of one or more of the listed items can be used, and only one of each item in the list may be needed. In other words, "at least one of" means any combination of items and number of items may be used from the list, but not all of the items in the list are required. The item can be a particular object, a thing, or a category.

For example, without limitation, "at least one of item A, item B, or item C" may include item A, item A and item B, or item B. This example also may include item A, item B, and item C or item B and item C. Of course, any combinations of these items can be present. In some illustrative examples, "at least one of" can be, for example, without limitation, two of item A; one of item B; and ten of item C; four of item B and seven of item C; or other suitable combinations.

In this illustrative example, human operator **124** operates smart glasses **120** and human operator **126** operates smart glasses **122.** In this example, human operator **124** and human operator **126** place layers of composite plies on tool as part of a process for fabricating a composite structure. The composite structure can be, for example, a composite part for an aircraft.

In this illustrative example, composite ply **130** has already been laid on tool **128.** As depicted, human operator **124** and human operator **126** are preparing to place another composite ply onto tool **128.**

In this illustrative example, the visualization of the placement of the new composite ply can be performed using smart glasses **120** operated by human operator **124** and smart glasses **122** operated by human operator **126.**

As depicted, smart glasses **120** and smart glasses **122** operate to scan tool **128.** In this illustrative example, the scan can be performed by smart glasses **120** using simultaneous localization and mapping (SLAM) process **132** and by smart glasses **122** using simultaneous location and mapping (SLAM) process **134.** The scan can include scanning tool **128** with a laser, lidar, an infrared scanner, or other suitable device the generates data about the surface of tool **128.**

In this illustrative example, smart glasses **120** and smart glasses **122** each have a different viewpoint of tool **128.** As result, scanning tool **128** from these different viewpoints can result in a more accurate scan of tool **128.**

For example, smart glasses **120** may not have a view of some locations on tool **128.** Smart glasses **122** may have a view of these locations missed by smart glasses **120.** In a similar fashion, smart glasses **122** may not have view of some locations that are within the view of smart glasses **120.**

The scan data **136** generated by smart glasses **120** and scan data **138** generated by smart glasses **122** from the scan of tool **128** are sent to visualizer **140** running on server computer **104.** Scan data **136** and scan data **138** can be point clouds generated by the smart glasses. In other illustrative examples, scan data **136** and scan data **138** can be other information that can be used to generate point clouds or other information suitable for mapping tool **128.**

In this illustrative example, visualizer **140** generates combined map **142** of tool **128** using scan data **136** and scan data **138.** Combined map **142** includes the placement of composite ply **130.**

By using scan data **136** and scan data **138** to generate combined map **142,** at least one of a more complete or accurate map of tool is generated. For example, scan data **136** and scan data **138** can cover more locations on tool **128** than just using scan data **136** or scan data **138** with respect to the different viewpoints from which scan data **136** and scan data **138** are generated.

In this illustrative example, layup information **144** about layup locations on tool **128** are obtained by visualizer **140** accessing composite structure model **146** in model database **148.** In this illustrative example, visualizer **140** sends layup information **144** smart glasses **120** and smart glasses **122.**

In this illustrative example, smart glasses **120** smart glasses **122** localize themselves with respect to tool **128** using the simultaneous location and mapping (SLAM) processes running on the smart glasses. With the position of smart glasses **120** and smart glasses **122** layup information **144** can be displayed to augment the live views seen through smart glasses **120** and smart glasses **122.** For example, layup information **144** can be an outline identifying where a new composite ply should be laid up on tool **128.**

In these illustrative examples, smart glasses **120** and smart glasses **122** can continue scan tool **128** and send scan data **136** and scan data **138** as human operator **124** and human operator **126** move to perform operations to layup composite plies for the composite part. As the human operators move with respect to tool **128,** the viewpoint of the smart glasses for tool **128** can change. As result, additional scan data sent from the smart glasses can provide additional information to increase the accuracy of combined map **142** for tool **128.**

Further, the additional scanning can also provide updates to changes to the layup of composite plies on tool **128.** As composite plies are added or are being positioned, scan data of these operations can be used to update combined map **142.**

In these illustrative examples, the generation of updates to combined map **142** are performed in real-time. In other words, scan data can be continuously or periodically generated by smart glasses **120** and smart glasses **122** while human operator **124** and human operator **126** are performing operations to layup composite plies on tool **128.**

As a result, combined map **142** can be a dynamic map of tool **128** along with any composite plies laid up on tool **128.** In this manner, the accuracy of combined map **142** can be increased and can include changes such as the placement of composite plies on tool **128.**

The illustration of this example in **Figure 1** is not meant to limit the manner in which other illustrative examples can be implemented. For example, one or more human operators with smart glasses can be present in generating scan data of tool **128.** In another illustrative example, a different type of object other than tool **128** can be present. For example, the human operators can perform the rework operation to form a scarf and install a patch comprised of layers of composite material. With this type of operation, layup information **144** can include a placement for the patch. Further, scarf information also can present to aid the human operators in forming the scarf.

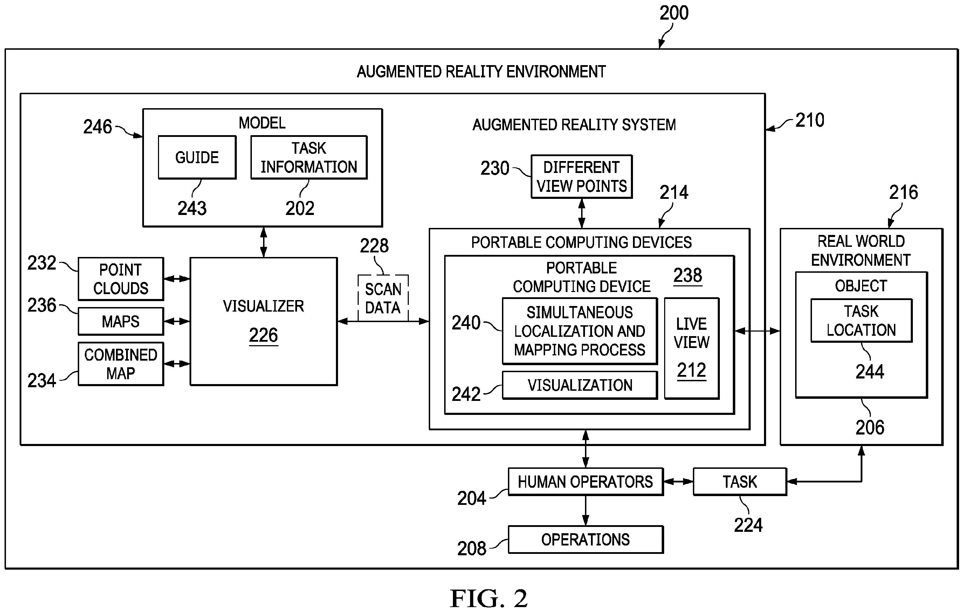

With reference to **Figure 2****,** an illustration of a block diagram of an augmented reality environment is depicted in accordance with an illustrative embodiment. The different hardware components in network data processing system **100** in **Figure 1** are examples of components that may be used in augmented reality environment **200.**

As depicted, augmented reality environment **200** is an environment in which task information **202** can be visualized by a number of human operators **204** viewing object **206.** In this example, the number of human operators **204** can perform operations **208** on object **206.** In this illustrative example, object **206** can be selected from a group comprising a tool, a wall, a workpiece, a wing, a fuselage section, an engine, a building, an aircraft, a vehicle, or some other suitable type of object.

In this illustrative example, the visualization of information **202** is performed using augmented reality system **210.** As depicted, augmented reality system **210** augments live view **212** of task location **244** for object **206.** Live view **212** is a view of real world environment **216** seen through portable computing devices **214.** In this illustrative example, live view **212** can be images or video generated by camera in the portable computing device and displayed on a display device in the portable computing device in real-time. In other examples, live view **212** can be directly seen by an operator through the portable computing device.

In this example, task information **202** can be displayed on live view **212** to augment live view **212** of real-world environment **216.** Task information **202** can include at least one of a task location, an outline of a ply, text with instructions for performing an operation, an image, a graphic, a video, or other suitable types of information that can be overlaid on live view **212** of object **206.**

As depicted, augmented reality system comprises computer system **218** and portable computing devices **214.** Computer system **218** is a physical hardware system and includes one or more data processing systems. When more than one data processing system is present in computer system **218,** those data processing systems are in communication with each other using a communications medium. The communications medium can be a network. The data processing systems can be selected from at least one of a computer, a server computer, a tablet computer, or some other suitable data processing system.

Portable computing devices **214** are physical hardware devices that are used by human operators **204** to visualize task information **202** about object **206.** Portable computing devices **214** can be selected from at least one of a mobile phone, a tablet computer, smart glasses, a head mounted display, or some other suitable computing device. In this illustrative example, portable computing devices **214** scan object **206** using at least one of a laser scanner, a structured light three-dimensional scanner, an infrared light scanner, or some other suitable type of device that can create scan data **228.**

In this illustrative example, augmented reality system enables one or more of human operators **204** operating portable computing devices **214** to visualize a live view **212** of object **206** by augmenting live view **212** with task information **202** for performing task **224** on object **206.**

In the illustrative examples, task **224** can take a number of different forms. Task **224** can be selected from at least one of placing a composite ply, applying a plague, applying an applique, performing an inspection of the task location, drilling a hole, installing a fastener, connecting a part to an assembly, removing a part, a surgery procedure, forming a metal bond, applying paint, making a measurement, or some other operation for task **224.**

In this illustrative example, visualizer **226** in computer system **218** is in communication with portable computing devices **214.** These components are in communication with each other using wireless communications links in these illustrative examples.

In this illustrative example, scan data **228** is generated from scanning object **206** with the portable computing devices **214** on human operators **204** at different viewpoints **230** to object **206.** In this illustrative example, scan data **228** is generated and received in real-time.

In the illustrative examples, a viewpoint is a perspective from a sensor in a portable computing device. For example, the sensor can be a camera or a scanner. The viewpoint can be a position comprising a location in three-dimensional space and an orientation for portable computing device.

Visualizer **226** operates to receive scan data **228** from portable computing devices **214.** As depicted, visualizer **226** creates point clouds **232** from scan data **228** generated by portable computing devices **214.** In this illustrative example, visualizer **206** can receive scan data **228** in real-time. Visualizer **226** creates combined map **234** of object **206** using point clouds **232.**

In creating combined map **234,** visualizer **226** creates a map from each point cloud in point clouds **232** to form a plurality of maps **236** and combines the plurality of maps **236** to form the combined map **234.** The combining of the plurality of maps **236** can be performed by identifying common features between the point clouds in using those local feature correspondences to combine the point clouds. These common features can be at least one of features occurring on object **206,** fiducial markers placed on object **206,** or fiducial markers placed near object **206.** Features on object 206 can include at least one of a hole, fastener, a seam, an elongated protrusion, a corner, an end or some other feature on object **206.** In another illustrative example, combined map **234** can be generated by combining point clouds **232** and then creating combined map **234.**

In the illustrative example, combined map **234** and maps **236** are three-dimensional maps. These maps represent the surface of object **206** as well as any other items or things that may be on or touching object **206.**

In this illustrative example, portable computing device **238** in portable computing devices **214** is localized to object **206.** The localization identifies the position of computing device **238** to object **206.** The position of portable computing device **238** is a location and orientation of portable computing device **238** in three-dimensional space.

This localization can be performed using simultaneous localization and mapping process (SLAM) **240** running on portable computing device **238.** Portable computing device **238** displays task information **202** for task location **244** on live view **212** of object **206.** In this illustrative example, visualization **242** of task location **244** can be performed using task information **202.** For example, task information **202** can include the coordinates for task location **244.** Visualization **242** can be a graphical indicator visually identifying task location **244** on live view **212** of object **206.** Visualization **242** is displayed for use in performing task **224** on object **206.** Additionally, visualization **242** can also include other information such as guide **243** to aid in the placement of a component such as a part, assembly, composite ply, or other components for object **206.**

For example, guide **243** can take the form of an outline of a composite ply, a pattern for composite ply, an outline of the hole, or other suitable graphical information to guide human operators **204** in performing operations **208** to perform task **224** on object **206** and task location **244.**

Further, guide **243** can be used as the visual indication of task location **244.** For example, guide **243** can be an outline of composite ply that is displayed at task location **244** in the position where the composite ply should be placed. In other words, the composite ply can be placed to fit within the outline displayed on live view **212** of object **206.**

The visualization is made on live view **212** of object **206** to indicate the location of task location **244** using model **246** of object **206** and combined map **234** generated from scans of object **206** performed by portable computing devices **214.** In this illustrative example, model **246** is a reference map that can be compared to combined map **234** generated from scan data **228.** Model **246** and combined map **234** can be aligned with each other for use in generating at least one of coordinates, program code, instructions, or other information used to display task information **202** in the desired location on live view **212** of object **206.** For example, if task information **202** includes a location of a composite ply, these two models can be used to display an outline of the composite ply from model **242** of object **206** on the correct position in the live view of object **206.**

In the illustrative examples, task **224** to be performed at task location **244** can take a number of different forms. For example, task location **244** is for at least one of a composite ply, a part in an assembly in which the object is the assembly, a plaque, an applique, or some other suitable line. Task **224** can be selected from at least one of placing a composite ply, applying a plague, applying an applique, performing an inspection of the task location, drilling a hole, installing a fastener, connecting a part to an assembly, removing a part, or some operation for task **224.**

In the illustrative example, visualizer **226** can be implemented in software, hardware, firmware or a combination thereof. When software is used, the operations performed by visualizer **226** can be implemented in program code configured to run on hardware, such as a processor unit. When firmware is used, the operations performed by visualizer **226** can be implemented in program code and data and stored in persistent memory to run on a processor unit. When hardware is employed, the hardware may include circuits that operate to perform the operations in visualizer **226.**

In the illustrative examples, the hardware may take a form selected from at least one of a circuit system, an integrated circuit, an application specific integrated circuit (ASIC), a programmable logic device, or some other suitable type of hardware configured to perform a number of operations. With a programmable logic device, the device can be configured to perform the number of operations. The device can be reconfigured at a later time or can be permanently configured to perform the number of operations. Programmable logic devices include, for example, a programmable logic array, a programmable array logic, a field programmable logic array, a field programmable gate array, and other suitable hardware devices. Additionally, the processes can be implemented in organic components integrated with inorganic components and can be comprised entirely of organic components excluding a human being. For example, the processes can be implemented as circuits in organic semiconductors.

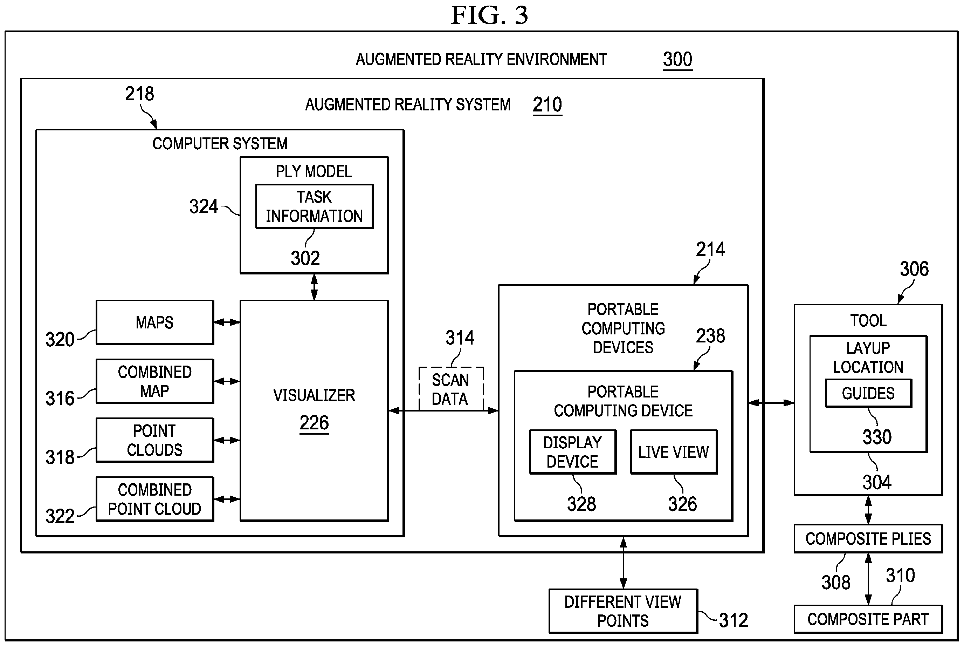

With reference next to **Figure 3****,** an illustration of a block diagram of an augmented reality system used for visualizing task information for placing a composite ply at a layup location on a tool is depicted in accordance with an illustrative embodiment. In the illustrative examples, the same reference numeral may be used in more than one figure. This reuse of a reference numeral in different figures represents the same element in the different figures.

In this illustrative example, augmented reality system **210** is used in augmented reality environment **300** for visualizing task information **302** for layup location 304 on tool **306.** In this particular example, tool **306** is a structure on which composite plies **308** can be laid up as part of a process for manufacturing composite part **310.** Tool **306** can be, for example, selected from a group comprising a mandrel, a mold, a composite tool, and other suitable types of tools.

In this example, visualizer **226** in computer system **218** operates to receive scan data **314** from portable computing devices **214** on human operators **204** at different viewpoints **312** to tool **306** to generate scan data **314.** Further, visualizer **226** creates combined map **316** of tool **306** using scan data **314** obtained from portable computing devices **214** at different viewpoints **312** of tool **306.**

In one illustrative example, visualizer **226** creates point clouds **318** of tool **306** from scan data **314.** In creating point clouds **318** of tool **306,** point clouds **318** can also include any composite plies, release films, or other components that have been placed on tool **306.** Each point cloud in point clouds **318** is generated from scan data **314** received from a portable computing device in portable computing devices **214.** Visualizer **226** creates create a plurality of maps **320** of tool **306** using scan data **314** generated by portable computing devices **214** and combines the plurality of maps **320** for forming combined map **316** of tool **306.**

In this example, visualizer **226** identifies common reference points in the plurality of maps **320** and combines the plurality of maps **320** using the common reference points to form combined map **316.** These reference points may be for at least one of features on tool **306** or fiducial markers used with tool **306.**

In this example, combined map **316** has increased accuracy from the plurality of maps **320** created from scan data **314** generated different viewpoints **312.** For example, if only a single map is used, the scan data for that single map may be missing data for portions of tool **306** from the scan performed from the viewpoint of the portable computing device. For example, scan data can be missing for portions of the object **206** not visible to the portable computing device.

By combining scan data from different viewpoints, a more complete data set is present for generating a map of tool **306.** As result, increased accuracy is present

In another illustrative example, point clouds **318** can be combined to form combined point cloud **322.** Visualizer **206** can then generate combined map **316** from combined point cloud **322.**

As depicted, visualizer **226** identifies task information **302** for layup location **304** in ply model **324** of composite plies **308** for composite part **310.** Task information **302** can include information selected from at least one of an identification of files, ply order, ply orientation, placement information, a curing temperature, a curing time, or other suitable information for fabricating composite part **310** on tool **306.**

Visualizer **226** sends task information **302** for layup location **304** on tool **306** to portable computing device **238** in portable computing devices **214.** In this illustrative example, portable computing device **238** displays task information **302** for layup location **304** on tool **306** on live view **326** of tool **306** seen through display device **328** in portable computing device **238** which has been localized using combined map **316** of tool **306** and ply model **324** of composite plies **308.** Displayed task information augments live view **326** of tool **306.**

As depicted, portable computing device **238** identifies layup location **304** in ply model **324** of composite plies **308** for composite part **310.** This determination can be made a number of different ways. For example, portable computing device **238** can contain a local copy of ply model **324.** In another illustrative example, mobile computing device **238** can access ply model **324** by sending requests to visualizer **226.**

As depicted, portable computing device **214** determines a location on live view **326** for a number of guides **330** for a number of composite plies **308** using ply model **324** and combined map **316.** Portable computing device **214** displays the number of guides **330** for a number of composite plies **308** at the location on live view **326** of tool **306** seen through display device **328** in portable computing device **238** that has been localized to tool **306.** As depicted, the number of guides **330** aids in placement of the number of composite plies **308** on tool **306.** This guide can be an aid used to layup a composite ply in a correct position for at least one of fabricating a composite part or reworking the composite part **310** on tool **306.** In this illustrative example, the number of guides **330** can be at least one of an outline, a pattern, or some other suitable visual display that guides placement of a composite ply on tool **306.**

In another illustrative example, the number of guides **330** can include can be a number of additional outlines or patterns for a number of composite plies **308** at layup location **304** on live view **326** of tool **306** seen through display device **328** in portable computing device **238** that has been localized.

The number of additional outlines or patterns illustrates a number of prior placements for the number of composite plies **308** on the tool **306.** These prior placements can be placements made previously on the same tool or an identical tool for the same composite part. In this manner, the comparison of the of composite ply placement can be made.

Additionally, portable computing device **238** can display other task information in task information **302** in addition to guides **330** at layup location **304** as part of an augmented reality display in which the other task information is displayed on live view **326** of tool **306.** For example, portable computing device **238** can display at least one of a ply number, an instruction, an image, or video for placing the number of composite plies.

In one illustrative example, one or more technical solutions are present that overcome a technical problem with providing a guide for placing a ply on a tool. In the illustrative examples, one or more technical solutions provide visualizations of task locations using portable computing devices in place of an overhead laser tracker. In the illustrative examples, one or more technical solution uses scans of the tool from multiple portable computing devices at different viewpoints to increase the accuracy of the visualizations of task locations. One or more technical solutions involve combining scan data received from the portable computing devices to form a combined map of the object, such as a tool, such that scan data from one portable computing device that is missing scan data for a portion of the tool can be supplemented with scan data including the portion of the tool from another portable computing device.

As a result, one or more technical solutions may provide a technical effect providing visualization of task locations on objects with increased accuracy by using scan data from multiple portable computing devices as compared to currently used techniques.

Computer system **218** can be configured to perform at least one of the steps, operations, or actions described in the different illustrative examples using software, hardware, firmware or a combination thereof. As a result, computer system **218** operates as a special purpose computer system in which visualizer **226** in computer system **218** enables visualizing task information **302** on live view **212** of object **206** in a manner that provides an augmented reality display in which task information **202** is overlaid on live view **212** of object **206.** In particular, visualizer **226** transforms computer system **216** into a special purpose computer system as compared to currently available general computer systems that do not have visualizer **226.**

The illustration of augmented reality system **210** in **Figure 2** and in **Figure 3** is not meant to imply physical or architectural limitations to the manner in which an illustrative embodiment may be implemented. Other components in addition to or in place of the ones illustrated may be used. Some components may be unnecessary. Also, the blocks are presented to illustrate some functional components. One or more of these blocks may be combined, divided, or combined and divided into different blocks when implemented in an illustrative embodiment.

For example, simultaneous localization and mapping process **240** can run on computer system **218** rather than on portable computing device **238.**

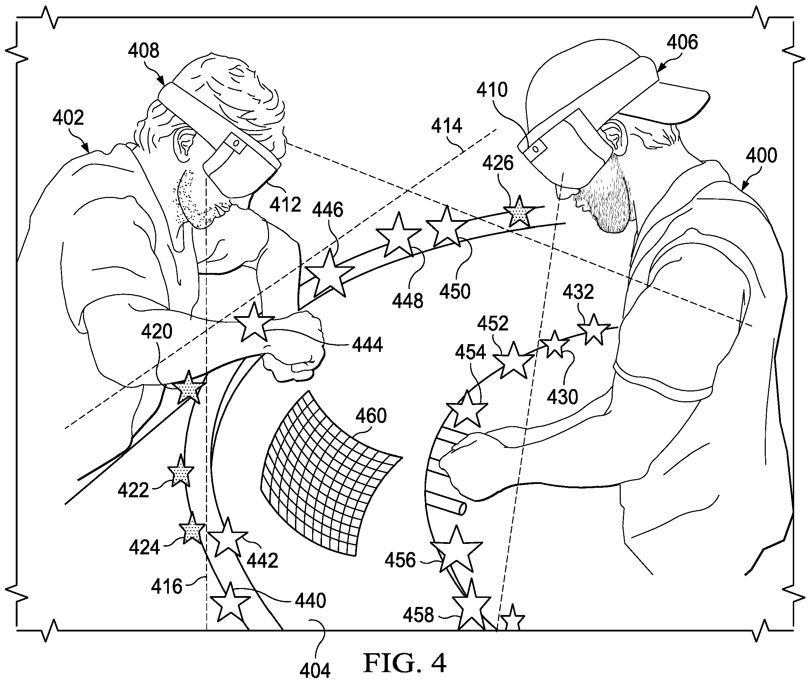

Turning to **Figure 4****,** an illustration of human operators performing operations at a tool is depicted in accordance with an illustrative embodiment. In this illustrative example, human operator **400** and human operator **402** perform operations to layup composite plies on tool **404** as part of a process to fabricate a composite part. In yet another illustrative example, one or more tasks may be performed in addition to task **224.** For example, task **224** can be placement of a composite ply. A subsequent task can be inspection of the composite ply to determine whether the placement is correct.

As depicted, human operator **400** wears smart glasses **406,** and human operator **402** wears smart glasses **408.** Smart glasses **406** and smart glasses **408** are examples of implementations for portable computing devices **214** shown in block form in **Figure 2** and **Figure 3****.**

As depicted, smart glasses **406** and smart glasses **408** are at different viewpoints with respect to tool **404.** In this example, smart glasses **406** as viewpoint **410** and smart glasses **408** has viewpoint **412.** These viewpoints are directed towards tool **404** from different positions. In other words, viewpoint **410** and viewpoint **412** are different viewpoints from each other.

In this illustrative example, smart glasses **406** scans tool **404** through view **414.** In this illustrative example, the scan is performed using at least one of a laser scanner, and infrared scanner, or some other suitable type of sensor. For example, smart glasses **408** may use a laser scanner, while smart glasses **406** may be use an infrared scanner. As another example, smart glasses **406** and smart glasses **406** may each have both a laser scanner and infrared scanner.

View **414** is the three-dimensional space that can be scanned by smart glasses **406.** View **416** is the three-dimensional space that can be scanned by smart glasses **408.** These views can also define the live views seen by operators through the smart glasses. For example, view **414** can be a live view seen by human operator **400** through smart glasses **406.** View **416** can be the live view seen by human operator **402** through smart glasses **408.** In other illustrative examples, the view for scanning and view for the live view may be different but from the same viewpoint. A view is the portion of augmented reality environment 300 that can be scanned or seen by a sensor in a portable computing device.

Scanning these views from the different viewpoints results in two sets of scans that have different scan data. The scan data can be used to generate a combined map that combines data from both of the scans. This combined map is more accurate than using a scan only from one of the smart glasses.

For example, smart glasses **406** and smart glasses **408** can scan tool **404** in which some locations are only visible in view **414** for smart glasses **406** and some locations are visible only to view **416** for smart glasses **408.** With the scan, some locations are visible in the views for both smart glasses.

For example, in view **414** for smart glasses **406,** location **420,** location **422,** location **424,** location **426** can be scanned by smart glasses **406** as well as being in the live view of smart glasses **406.** These locations, however, are not within view **416** for smart glasses **408.**

As depicted, in view **416** for smart glasses **408,** location **430** and location **432** can be scanned and are visible in the live view of smart glasses **408.** These locations are not within view **414** for smart glasses **406.**

In this illustrative example, location **440,** location **442,** location **444,** location **446,** location **448,** location **450,** location **452,** location **454,** patient **456,** and location **458** are locations that are scannable from view **414** of smart glasses **406** and view **416** of smart glasses **408.**

As a result, the scan data generated by each of the smart glasses includes common locations scanned by both of the smart glasses as well as locations that are standby only one of the smart glasses. By using the scan data from these two smart glasses from the different viewpoints, a more accurate map of tool **404** can be generated for use in laying up composite layers for a composite part.

In this illustrative example, smart glasses **406** and smart glasses **408** localized themselves using processes running on these smart classes. These processes can include, for example, currently available simultaneous localization and mapping processes. In other words, smart glasses **406** and smart glasses **408** can identify their positions with respect to tool **404.** In this illustrative example, the positions of smart glasses **406** and smart glasses **408** are in three-dimensional space and include an orientation.

Further, the smart glasses can identify the corresponding location with respect to a ply model for the composite part. Display model also can include a model of tool **404** and the layup of plies on tool **404** that form the composite part.

In this illustrative example, pattern **460** is displayed on the live view seen through both smart glasses **406** and smart glasses **408** to provide a visualization of the placement for a composite layer on tool **404.** With the scan data generated by both smart glasses, the standard can be combined to more accurately index or locate pattern **460** on tool **404.**

Further, as human operator **400** and human operator **402** move, additional scans of tool **404** can be made. These additional scans can be used with the already generated scans of tool **404** to improve the accuracy of the map for tool **404.** Further, the scans can also include any composite plies that have been placed on tool **404.** These scans can also verify the accuracy of plies that have been placed on tool in addition to providing a guide for additional plies that are to be placed on tool **404** on top of composite plies that already been placed on tool **404.**

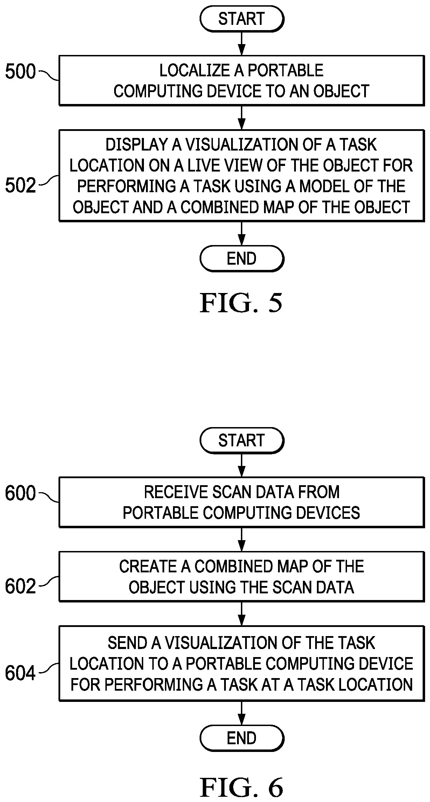

Turning next to **Figure 5****,** an illustration of a flowchart of a process for augmenting a live view of a task location on a portable computing device is depicted in accordance with an illustrative embodiment. The process in **Figure 5** can be implemented in hardware, software, or both. When implemented in software, the process can take the form of program code that is run by one or more processor units located in one or more hardware devices in one or more computer systems. For example, the process can be implemented in at least one of smart glasses **120** in **Figure 1****,** smart glasses **122** in **Figure 1****,** portable computing devices **214** including portable computing device **238** in augmented reality system **210** in in **Figure 2****,** smart glasses **406** in **Figure 4****,** or smart glasses **408** in **Figure 4****.**

The process begins by localizing a portable computing device to an object (operation **500**). The process displays a visualization of a task location on a live view of the object for performing a task using a model of the object and a combined map of the object (operation 502). The combined map is generated from scans of the object by portable computing devices at different viewpoints to the object. The process terminates thereafter.

Operation **502** can be performed in a number of different ways. For example, the model of the object in the combined map of the object can be downloaded from the computer system to the portable computing device. The portable computing device can then use these models to display the visualization of the task location. This visualization can be, for example, an outline of the ply in the proper location on the tool. In another illustrative example, the computer system can generate the outline and identify the placement on the live view for the portable computing device. The computer system can then send the outline to the portable computing device along with at least one of program code, instructions, or other information needed to display the outline on the live view seen through the portable computing device.

With reference to **Figure 6**, an illustration of flowchart of a process for processing scan data is depicted in accordance with an illustrative embodiment. The process in **Figure 6** can be implemented in hardware, software, or both. When implemented in software, the process can take the form of program code that is run by one or more processor units located in one or more hardware devices in one or more computer systems. For example, the process can be implemented in at least one of visualizer **140** running on server computer **104** in **Figure 1** or visualizer **226** in computer system **218** in **Figure 2****.**

The process begins by receiving scan data from portable computing devices (operation **600**). The scan data is generated from scanning the object with the portable computing devices on human operators at different viewpoints to the object.

The process creates a combined map of the object using the scan data (operation **602**). The process sends a visualization of the task location to a portable computing device for performing a task at a task location (operation **604**). The process terminates thereafter.

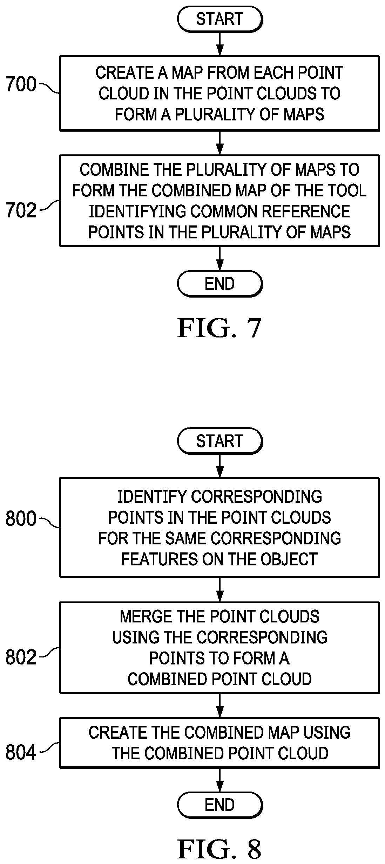

With reference next to **Figure 7****,** an illustration of a flowchart of a process for creating a combined map is depicted in accordance with an illustrative embodiment. The process in **Figure 7** can be implemented in hardware, software, or both. When implemented in software, the process can take the form of program code that is run by one of more processor units located in one or more hardware devices in one or more computer systems. For example, the process can be implemented in at least one of visualizer **140** running on server computer **104** in **Figure 1** or visualizer **226** in computer system **218** in **Figure 2****.**

The process begins by creating a map from each point cloud in the point clouds to form a plurality of maps (operation **700**). The process combines the plurality of maps to form the combined map of the tool identifying common reference points in the plurality of maps (operation **702**). The process terminates thereafter.

In operation **702,** the maps are combined using the common reference points. These common reference points can be selected for features that are present in each of the plurality of maps. The combined map has increased accuracy from the maps created from scan data generated the different viewpoints.

With reference next to **Figure 8****,** an illustration of a flowchart of a process for creating a combined map is depicted in accordance with an illustrative embodiment. The process in **Figure 8** can be implemented in hardware, software, or both. When implemented in software, the process can take the form of program code that is run by one of more processor units located in one or more hardware devices in one or more computer systems. For example, the process can be implemented in at least one of visualizer **140** running on server computer **104** in **Figure 1** or visualizer **226** in computer system **218** in **Figure 2****.**

The process begins by identifying corresponding points in the point clouds for the same corresponding features on the object (operation **800**). In operation **800,** the number of corresponding points for the same correspond features can be, for example, 3 or 4 points. The process merges the point clouds using the corresponding points to form a combined point cloud (operation **802**). The process creates the combined map using the combined point cloud (operation **804**). The process terminates thereafter.

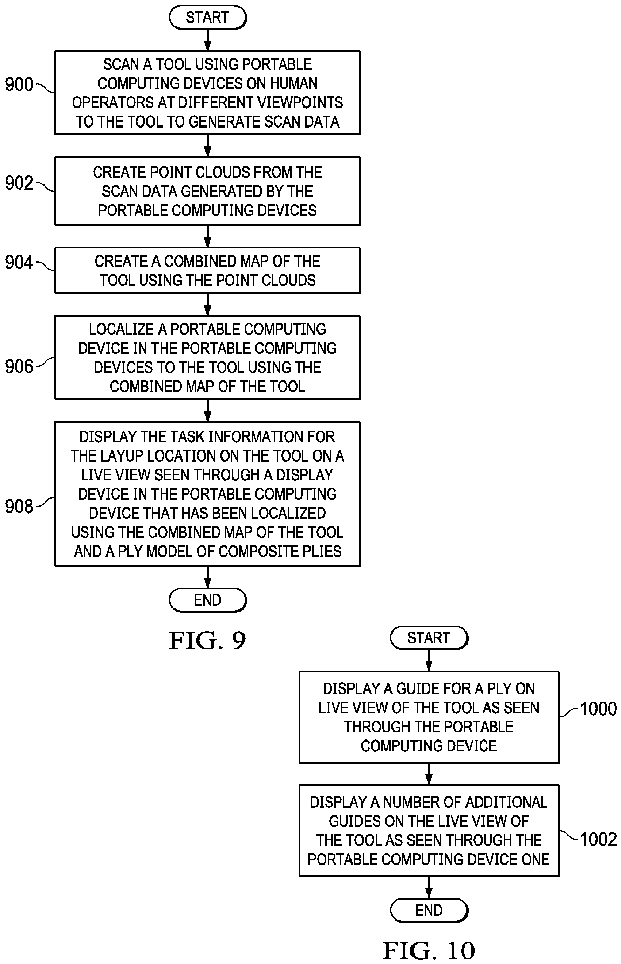

In **Figure 9****,** an illustration of a flowchart of a process for visualizing task information for a layup location on a tool is depicted in accordance with an illustrative embodiment. The process in **Figure 9** can be implemented in hardware, software, or both. When implemented in software, the process can take the form of program code that is run by one of more processor units located in one or more hardware devices in one or more computer systems. For example, the process can be implemented in augmented reality system **210** in **Figure 3****.** The operations can be implemented in at least one of computer system **218** or portable computing devise **214** in **Figure 3****.** The operation can be implemented to provide a visualization of task information **302** on live view **326** of tool **306.** This type of display augments live view **326** to provide an augmented reality display to a human operator.

The process begins by scanning a tool using portable computing devices on human operators at different viewpoints to the tool to generate scan data (operation **900**). The process creates point clouds from the scan data generated by the portable computing devices (operation **902**). The process creates a combined map of the tool using the point clouds (operation **904**).

The process localizes a portable computing device in the portable computing devices to the tool using the combined map of the tool (operation **906**). The process displays the task information for the layup location on the tool on a live view seen through a display device in the portable computing device that has been localized using the combined map of the tool and a ply model of composite plies (operation **908**). The process terminates thereafter.

With reference next to **Figure 10****,** an illustration of a flowchart of a process for displaying a visualization of task information is depicted in accordance with an illustrative embodiment. The process illustrated in **Figure 10** is an example of one implementation for operation **502** in **Figure 5** and operation **908** in **Figure 9****.**

The process begins by displaying a guide for a ply on live view of the tool as seen through the portable computing device (operation **1000**). The guide displayed in operation **1000** is for next ply be placed on the tool.

The process displays a number of additional guides on the live view of the tool as seen through the portable computing device one (operation **1002**). The display of the number of additional guides can be made in a manner that distinguishes number of additional guides from the guide for the ply. In this example, the number of additional guides can be for composite plies already placed in the tool. In this manner, the alignment of previously composite plies can be identified and visualized in the augmented reality display of the tool. This augmented reality display can be used to determine whether prior composite plies have shifted during the layup of composite plies on the tool.

Additionally, the number additional guides can also provide a visualization of how the same ply was previously placed on the tool in prior operations to form the composite part. The placement of prior composite plies can be obtained from a database containing history of composite ply placements. The history of composite ply placements can be identified from scans performed during placement of the composite plies. In this manner, an identification of changes between the current placement and prior placements can be visualized. These changes can occur from at least one of a change in ply dimensions, slippages, changes to the tool, or other potential sources that can change the alignment for the same ply over time.

The flowcharts and block diagrams in the different depicted embodiments illustrate the architecture, functionality, and operation of some possible implementations of apparatuses and methods in an illustrative embodiment. In this regard, each block in the flowcharts or block diagrams can represent at least one of a module, a segment, a function, or a portion of an operation or step. For example, one or more of the blocks can be implemented as program code, hardware, or a combination of the program code and hardware. When implemented in hardware, the hardware may, for example, take the form of integrated circuits that are manufactured or configured to perform one or more operations in the flowcharts or block diagrams. When implemented as a combination of program code and hardware, the implementation may take the form of firmware. Each block in the flowcharts or the block diagrams may be implemented using special purpose hardware systems that perform the different operations or combinations of special purpose hardware and program code run by the special purpose hardware.

In some alternative implementations of an illustrative embodiment, the function or functions noted in the blocks may occur out of the order noted in the figures. For example, in some cases, two blocks shown in succession may be performed substantially concurrently, or the blocks may sometimes be performed in the reverse order, depending upon the functionality involved. Also, other blocks may be added in addition to the illustrated blocks in a flowchart or block diagram.

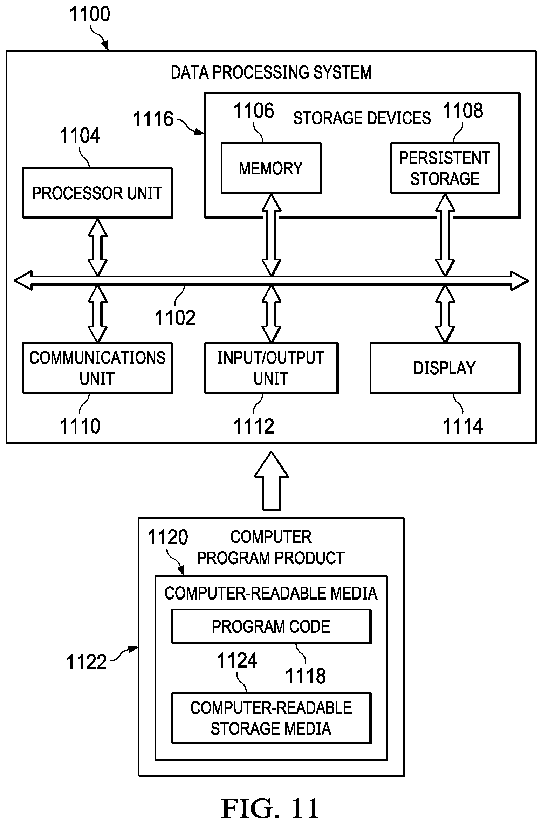

Turning now to **Figure 11****,** an illustration of a block diagram of a data processing system is depicted in accordance with an illustrative embodiment. Data processing system **1100** can be used to implement server computer **104,** server computer **106,** client devices **110,** in **Figure 1****.** Data processing system **1100** can also be used to implement computer system **218** in **Figure 2** and **Figure 3****.** In this illustrative example, data processing system **1100** includes communications framework **1102,** which provides communications between processor unit **1104,** memory **1106,** persistent storage **1108,** communications unit **1110,** input/output (I/O) unit **1112,** and display **1114.** In this example, communications framework **1102** takes the form of a bus system.

Processor unit **1104** serves to execute instructions for software that can be loaded into memory **1106.** Processor unit **1104** include one or more processors. For example, processor unit **1104** can be selected from at least one of a multicore processor, a central processing unit (CPU), a graphics processing unit (GPU), a physics processing unit (PPU), a digital signal processor (DSP), a network processor, or some other suitable type of processor.

Memory **1106** and persistent storage **1108** are examples of storage devices **1116.** A storage device is any piece of hardware that is capable of storing information, such as, for example, without limitation, at least one of data, program code in functional form, or other suitable information either on a temporary basis, a permanent basis, or both on a temporary basis and a permanent basis. Storage devices **1116** may also be referred to as computer-readable storage devices in these illustrative examples. Memory **1106,** in these examples, can be, for example, a random-access memory or any other suitable volatile or non-volatile storage device. Persistent storage **1108** may take various forms, depending on the particular implementation.

For example, persistent storage **1108** may contain one or more components or devices. For example, persistent storage **1108** can be a hard drive, a solid-state drive (SSD), a flash memory, a rewritable optical disk, a rewritable magnetic tape, or some combination of the above. The media used by persistent storage **1108** also can be removable. For example, a removable hard drive can be used for persistent storage **1108.**

Communications unit **1110,** in these illustrative examples, provides for communications with other data processing systems or devices. In these illustrative examples, communications unit **1110** is a network interface card.

Input/output unit **1112** allows for input and output of data with other devices that can be connected to data processing system **1100.** For example, input/output unit **1112** may provide a connection for user input through at least one of a keyboard, a mouse, or some other suitable input device. Further, input/output unit **1112** may send output to a printer. Display **1114** provides a mechanism to display information to a user.

Instructions for at least one of the operating system, applications, or programs can be located in storage devices **1116,** which are in communication with processor unit **1104** through communications framework **1102.** The processes of the different embodiments can be performed by processor unit **1104** using computer-implemented instructions, which may be located in a memory, such as memory **1106.**

These instructions are referred to as program code, computer usable program code, or computer-readable program code that can be read and executed by a processor in processor unit **1104.** The program code in the different embodiments can be embodied on different physical or computer-readable storage media, such as memory **1106** or persistent storage **1108.**

Program code **1118** is located in a functional form on computer-readable media **1120** that is selectively removable and can be loaded onto or transferred to data processing system **1100** for execution by processor unit **1104.** Program code **1118** and computer-readable media **1120** form computer program product **1122** in these illustrative examples. In this illustrative example, computer-readable media **1120** is computer-readable storage media **1124.**

In these illustrative examples, computer-readable storage media **1124** is a physical or tangible storage device used to store program code **1118** rather than a medium that propagates or transmits program code **1118.**

Alternatively, program code **1118** can be transferred to data processing system **1100** using a computer-readable signal media. The computer-readable signal media can be, for example, a propagated data signal containing program code **1118.** For example, the computer-readable signal media can be at least one of an electromagnetic signal, an optical signal, or any other suitable type of signal. These signals can be transmitted over connections, such as wireless connections, optical fiber cable, coaxial cable, a wire, or any other suitable type of connection.

The different components illustrated for data processing system **1100** are not meant to provide architectural limitations to the manner in which different embodiments can be implemented. In some illustrative examples, one or more of the components may be incorporated in or otherwise form a portion of another component. For example, the **1106,** or portions thereof, may be incorporated in processor unit **1104** in some illustrative examples. The different illustrative embodiments can be implemented in a data processing system including components in addition to or in place of those illustrated for data processing system **1100.** Other components shown in **Figure 11** can be varied from the illustrative examples shown. The different embodiments can be implemented using any hardware device or system capable of running program code **1118.**

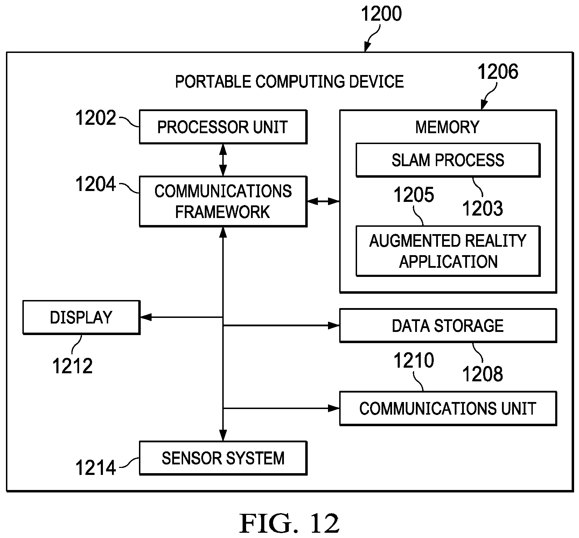

With reference to **Figure 12****,** an illustration of a block diagram of a portable computing device is depicted in accordance with an illustrative embodiment. Portable computing device **1200** is an example of one manner in which smart glasses **120,** smart glasses **122,** portable computing device **214,** smart glasses **406,** and smart glasses **408** can be implemented. In this illustrative example, portable computing device **1200** includes physical hardware components such as processor unit **1202,** communications framework **1204,** memory **1206,** data storage **1208,** communications unit **1210,** display **1212,** and sensor system **1214.**

Communications framework **1204** allows different components in portable computing device **1200** to communicate with each other when connected to communications framework **1204.** Communications framework **1204** is a bus system in this illustrative example.

Processor unit **1202** processes program code for software loaded into memory **1206.** Processor unit **1202** include one or more processors. For example, processor unit **1202** can be selected from at least one of a multicore processor, a central processing unit (CPU), a graphics processing unit (GPU), a physics processing unit (PPU), a digital signal processor (DSP), a network processor, or some other suitable type of processor.

Memory **1206** is connected to processor unit **1202** through communications framework **1204.** As depicted, memory **1206** can include at least one of a random-access memory (RAM), a read-only memory (ROM), a static random-access memory (SRAM), a dynamic random-access memory (DRAM), or other suitable types of memory devices or circuits.

As depicted, data storage **1208** is connected to communications framework **1204** and can store data, program code, or other information. Instructions in program code can be loaded from data storage **1208** into memory **1206** for processing by processor unit **1202.** For example, the instructions in program code can include a simultaneous localization and mapping (SLAM) process **1203** and an augmented reality application **1205** for displaying task information on a live view of an object.

Data storage **1208** can comprise at least one of a hard disk drive, a flash drive, a solid-state disk drive, an optical drive, or some other suitable type of data storage device or system. Data storage **1208** can store scan data, a map of an object, a model of the object, or other suitable information for use in an augmented reality display of task information overlaying a live view of an object.

In this illustrative example, communications unit **1210** provides for communications with other data processing systems or devices. In these illustrative examples, communications unit **1110** includes at least one of a network interface card, a wireless communications device, a universal serial bus port, or other suitable device.

Display **1212** is connected to communications framework **1204** and provides a mechanism to display information to a user. In this example, display **1212** can be a touch screen display, which enables receiving user input through this display.

In this illustrative example, sensor system **1214** is connected to communications framework **1204.** As depicted, sensor system **1214** can include hardware, software, or both. In this illustrative example, sensor system **1214** can include at least one of a laser scanner, a structured light three-dimensional scanner, a camera, or an infrared light scanner.

The illustration of portable computing device **1200** is an example of one manner in which portable computing device **1200** can be implemented. This illustration is not meant to limit the manner in which portable computing device **1200** can be embodied in other illustrative examples. For example, portable computing device **1200** can also include an audio interface in which an audio output device generates sound.

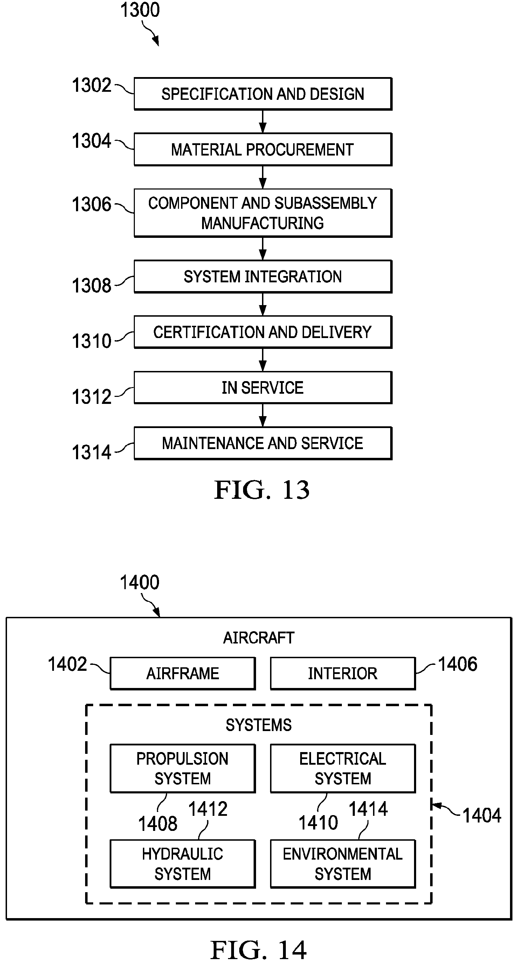

Illustrative embodiments of the disclosure may be described in the context of aircraft manufacturing and service method **1300** as shown in **Figure 13** and aircraft **1400** as shown in **Figure 14****.** Turning first to **Figure 13****,** an illustration of an aircraft manufacturing and service method is depicted in accordance with an illustrative embodiment. During pre-production, aircraft manufacturing and service method **1300** may include specification and design **1302** of aircraft **1400** in **Figure 14** and material procurement **1304.**

During production, component and subassembly manufacturing **1306** and system integration **1308** of aircraft **1400** in **Figure 14** takes place. Thereafter, aircraft **1400** in **Figure 14** may go through certification and delivery **1310** in order to be placed in service **1312.** While in service **1312** by a customer, aircraft **1400** in **Figure 14** is scheduled for routine maintenance and service **1314,** which may include modification, reconfiguration, refurbishment, and other maintenance or service.

Each of the processes of aircraft manufacturing and service method **1300** may be performed or carried out by a system integrator, a third party, an operator, or some combination thereof. In these examples, the operator may be a customer. For the purposes of this description, a system integrator may include, without limitation, any number of aircraft manufacturers and major-system subcontractors; a third party may include, without limitation, any number of vendors, subcontractors, and suppliers; and an operator may be an airline, a leasing company, a military entity, a service organization, and so on.

With reference now to **Figure 14****,** an illustration of an aircraft is depicted in which an illustrative embodiment may be implemented. In this example, aircraft **1400** is produced by aircraft manufacturing and service method **1300** in **Figure 13** and may include airframe **1402** with plurality of systems **1404** and interior **1406.** Examples of systems **1404** include one or more of propulsion system **1408,** electrical system **1410,** hydraulic system **1412,** and environmental system **1414.** Any number of other systems may be included. Although an aerospace example is shown, different illustrative embodiments may be applied to other industries, such as the automotive industry.

Apparatuses and methods embodied herein may be employed during at least one of the stages of aircraft manufacturing and service method **1300** in **Figure 13****.**

In one illustrative example, components or subassemblies produced in component and subassembly manufacturing **1306** in **Figure 13** may be fabricated or manufactured in a manner similar to components or subassemblies produced while aircraft **1400** is in service **1312** in **Figure 13****.** As yet another example, one or more apparatus embodiments, method embodiments, or a combination thereof may be utilized during production stages, such as component and subassembly manufacturing **1306** and system integration **1308** in **Figure 13****.** One or more apparatus embodiments, method embodiments, or a combination thereof may be utilized while aircraft **1400** is in service **1312,** during maintenance and service **1314** in **Figure 13****,** or both.

For example, augmented reality system **210** can be used to provide visualizations of task locations. These visualizations can include displaying task information to be performed at the task locations. Augmented reality system **210** can be utilized by human operators during at least one of component and subassembly manufacturing **1306,** system integration **1308,** certification and delivery **1310,** or maintenance and service **1314.**

The use of a number of the different illustrative embodiments may substantially expedite the assembly of aircraft **1400,** reduce the cost of aircraft **1400,** or both expedite the assembly of aircraft **1400** and reduce the cost of aircraft **1400.** For example, the use of augmented reality system **210** can increase accuracy in which operations are performed by human operators during various steps such as component and subassembly manufacturing **1306,** system integration **1308,** or maintenance and service **1314.**

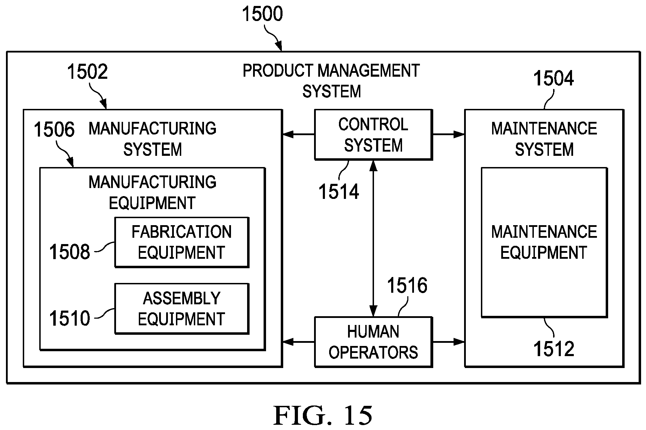

Turning now to **Figure 15****,** an illustration of a block diagram of a product management system is depicted in accordance with an illustrative embodiment. Product management system **1500** is a physical hardware system. In this illustrative example, product management system **1500** may include at least one of manufacturing system **1502** or maintenance system **1504.**

Manufacturing system **1502** is configured to manufacture products, such as aircraft **1400** in **Figure 14****.** As depicted, manufacturing system **1502** includes manufacturing equipment **1506.** Manufacturing equipment **1506** includes at least one of fabrication equipment **1508** or assembly equipment **1510.**

Fabrication equipment **1508** is equipment that may be used to fabricate components for parts used to form aircraft **1400** in **Figure 14****.** For example, fabrication equipment **1508** may include machines and tools. These machines and tools may be at least one of a drill, a hydraulic press, a furnace, a mold, a composite tape laying machine, a vacuum system, a lathe, or other suitable types of equipment. Fabrication equipment **1508** may be used to fabricate at least one of metal parts, composite parts, semiconductors, circuits, fasteners, ribs, skin panels, spars, antennas, or other suitable types of parts.

Assembly equipment **1510** is equipment used to assemble parts to form aircraft **1400** in **Figure 14****.** In particular, assembly equipment **1510** may be used to assemble components and parts to form aircraft **1400** in **Figure 14****.** Assembly equipment **1510** also may include machines and tools. These machines and tools may be at least one of a robotic arm, a crawler, a faster installation system, a rail-based drilling system, or a robot. Assembly equipment **1510** may be used to assemble parts such as seats, horizontal stabilizers, wings, engines, engine housings, landing gear systems, and other parts for aircraft **1400** in **Figure 14****.**

In this illustrative example, maintenance system **1504** includes maintenance equipment **1512.** Maintenance equipment **1512** may include any equipment needed to perform maintenance on aircraft **1400** in **Figure 14****.** Maintenance equipment **1512** may include tools for performing different operations on parts on aircraft **1400** in **Figure 14****.** These operations may include at least one of disassembling parts, refurbishing parts, inspecting parts, reworking parts, manufacturing replacement parts, or other operations for performing maintenance on aircraft **1400** in **Figure 14****.** These operations may be for routine maintenance, inspections, upgrades, refurbishment, or other types of maintenance operations.

In the illustrative example, maintenance equipment **1512** may include ultrasonic inspection devices, x-ray imaging systems, vision systems, drills, crawlers, and other suitable devices. In some cases, maintenance equipment **1512** may include fabrication equipment **1508,** assembly equipment **1510,** or both to produce and assemble parts that may be needed for maintenance.

Product management system **1500** also includes control system **1514.** Control system **1514** is a hardware system and may also include software or other types of components. Control system **1514** is configured to control the operation of at least one of manufacturing system **1502** or maintenance system **1504.** In particular, control system **1514** may control the operation of at least one of fabrication equipment **1508,** assembly equipment **1510,** or maintenance equipment **1512.**

The hardware in control system **1514** may be implemented using hardware that may include computers, circuits, networks, and other types of equipment. The control may take the form of direct control of manufacturing equipment **1506.** For example, robots, computer-controlled machines, and other equipment may be controlled by control system **1514.** In other illustrative examples, control system **1514** may manage operations performed by human operators **1516** in manufacturing or performing maintenance on aircraft **1400.** For example, control system **1514** may assign tasks, provide instructions, display models, or perform other operations to manage operations performed by human operators **1516.**

In these illustrative examples, augmented reality system **210** in **Figure 2** and **Figure 3** can be implemented for use with control system **1514** to manage at least one of the manufacturing or maintenance of aircraft **1400** in **Figure 14****.** For example, augmented reality system **210** can operate to provide human operators **1516** instructions and guidance for performing operations on an object. These operations can include operations to manufacture or operation for maintenance of the object. For example, control system **1514** can assign tasks such as laying up composite plies on a tool to one or more of human operators **1516.** Control system **1514** can send task information to augment live views to portable computing devices **214** in augmented reality system **210** worn or carried by human operators **1516.**

In the different illustrative examples, human operators **1516** may operate or interact with at least one of manufacturing equipment **1506,** maintenance equipment **1512,** or control system **1514.** This interaction may be performed to manufacture aircraft **1400** in **Figure 14****.**

Of course, product management system **1500** may be configured to manage other products other than aircraft **1400** in **Figure 14****.** Although product management system **1500** has been described with respect to manufacturing in the aerospace industry, product management system **1500** may be configured to manage products for other industries. For example, product management system **1500** can be configured to manufacture products for the automotive industry as well as any other suitable industries.

Thus, the illustrative embodiments provide a method, apparatus, and system for visualizing task locations. The visualization of task locations includes displaying information used to perform operations at the task locations in addition to identifying the task locations. In one illustrative example, one or more technical solutions are present that overcome a technical problem with a technical problem with providing a guide for placing a ply on a tool. In the illustrative examples, one or more technical solutions provide visualizations of task locations using portable computing devices in place of an overhead laser tracker.

In the illustrative examples, one or more technical solutions use scans of the tool from multiple portable computing devices at different viewpoints to increase the accuracy of the visualizations of task locations. Thus, one or more technical solutions in the illustrative examples involves combining scan data received from the portable computing devices to form a combined map of the object, such as a tool, such that scan data from one portable computing device that is missing scan data for a portion of the tool can be supplemented with scan data including the portion of the tool from another portable computing device.

As a result, one or more technical solutions may provide a technical effect providing visualization of task locations on objects with increased accuracy by using scan data from multiple portable computing devices as compared to currently used techniques.

The description of the different illustrative embodiments has been presented for purposes of illustration and description and is not intended to be exhaustive or limited to the embodiments in the form disclosed. The different illustrative examples describe components that perform actions or operations. In an illustrative embodiment, a component may be configured to perform the action or operation described. For example, the component may have a configuration or design for a structure that provides the component an ability to perform the action or operation that is described in the illustrative examples as being performed by the component.

Further, the disclosure comprises embodiments according to the following clauses:
Clause 1. A method for visualizing task information (302) for a layup location (304) on a tool (306), the method comprising:
   scanning a tool (306) using portable computing devices (214) on human operators (204) at different viewpoints (312) to the tool (306) to generate scan data (314);
   creating, by a computer system (218), point clouds (318) from the scan data (314) generated by the portable computing devices (214);
   creating, by the computer system (218), a combined map (316) of the tool (306) using the point clouds (318);
   localizing a portable computing device (238) in the portable computing devices (214) to the tool (306) using the combined map (316) of the tool (306); and
   displaying, by the portable computing device (238), the task information (302) for the layup location (304) on the tool (306) on a live view (326) seen through a display device (328) in the portable computing device (238) that has been localized using the combined map (316) of the tool (306) and a ply model (324) of composite plies (308), wherein displayed task information (302) augments the live view (326) of the tool (306).
Clause 2. The method of Clause 1 further comprising:
   placing a composite ply using a guide in the task information (302) displayed on the live view (326) of the layup location (304) on the tool (306), wherein the guide aids in placement of a number of the composite plies (308) on the tool (306).
Clause 3. The method of any preceding clause, wherein displaying the task information (302) for the layup location (304) on the tool (306) comprises:
   identifying the layup location (304) in the ply model (324) of the composite plies (308);
   determining a layup location (304) on the live view (326) for a number of guides (330) for a number of the composite plies (308) using the ply model (324) and the combined map (316); and
   displaying, by the portable computing device (238), the number of guides (330) for the number of the composite plies (308) at the layup location (304) on the live view (326) of the tool (306) seen through the display device (328) in in the portable computing device (238) that has been localized, wherein the number of guides (330) aids in placement of the number of the composite plies (308) on the tool (306).
Clause 4. The method of Clause 3 further comprising:
   displaying, by the portable computing device (238), a number of additional guides for the number of the composite plies (308) at the layup location (304) on the live view (326) of the tool (306) seen through the display device (328) in the portable computing device (238) that has been localized, wherein the number of additional guides illustrates a number of prior placements for the number of the composite plies (308) on the tool (306).
Clause 5. The method of Clause 3, wherein displaying task information (302) for the layup location (304) on the tool (306) further comprises:
   displaying at least one of a ply number, an instruction, an image, or video for placing the number of the composite plies (308).
Clause 6. The method of any preceding clause, wherein creating the combined map (316) of the tool (306) from the point clouds (318) comprises:
   creating a map from each point cloud in the point clouds (318) to form a plurality of maps (320); and
   combining the plurality of maps (320) to form the combined map (316) of the tool (306).
Clause 7. The method of Clause 6, wherein combining the plurality of maps (320) to form the combined map (316) comprises:
   identifying common reference points in the plurality of maps (320); and
   combining the plurality of maps (320) using the common reference points, wherein the combined map (316) has increased accuracy from the plurality of maps (320) created from scan data (314) generated from the different viewpoints (312).
Clause 8. The method of Clause 1, wherein localizing a portable computing device (238) in the portable computing devices (214) to the tool (306) using the model comprises:
   localizing the portable computing device (238) in the portable computing devices (214) to the tool (306) using the combined map (316) and a simultaneous localization and mapping process (240).
Clause 9. The method of any preceding clause, wherein the task information (302) for the layup location (304) is a guide to layup a composite ply for at least one of fabricating a composite part (310) or reworking the composite part (310).
Clause 10. The method of any preceding clause, wherein the tool (306) is selected from a group comprising a mandrel, a mold, a composite tool (306).
Clause 11. The method of any preceding clause, wherein the portable computing devices (214) are selected from at least one of smart glasses (120,122, 406, 408), a mobile phone (118), a tablet computer (116), or a head mounted display.
Clause 12. The method of any preceding clause, wherein the portable computing devices (214) scan the tool (306) using at least one of a laser scanner, a structured light three-dimensional scanner, or an infrared light scanner.
Clause 13. A method for augmenting a live view (212) of a task location (244), the method comprising:
   localizing a portable computing device (238) to an object (206); and
   displaying a visualization (242) of a task location (244) on the live view (212) of the object (206) for performing a task using a model of the object (206) and a combined map (234) of the object (206), wherein the combined map (234) is generated from scans of the object (206) by portable computing devices (214) at different viewpoints (230) to the object (206).
Clause 14. The method of Clause 13 further comprising:
   receiving scan data (228) from the portable computing devices (214) including the portable computing device (238), wherein the scan data (228) is generated from scanning the object (206) with the portable computing devices (214) on human operators (204) at different viewpoints (230) to the object (206).
Clause 15. The method of Clause 14, wherein the scan data (228) is received in real-time.
Clause 16. The method of Clause 14 further comprising:
   creating, by a computer system (218), point clouds (232) from the scan data (228) generated by the portable computing devices (214); and
   creating, by the computer system (218), the combined map (234) of the object (206) using the point clouds (232) .
Clause 17. The method of Clause 16, wherein creating, by the computer system (218), the combined map (234) of the object (206) using the point clouds (232) comprises:
   creating a map from each point cloud in the point clouds (232) to form a plurality of maps (236); and
   combining the plurality of maps (236) to form the combined map (234).
Clause 18. The method of any of clauses 13-17, wherein the task location (244) is for at least one of a composite ply, a part in an assembly in which the object (206) is the assembly, a plaque, or an applique.
Clause 19. The method of any of clauses 13-18, wherein the task is selected from at least one of placing a composite ply, applying a plague, applying an applique, performing an inspection of the task location (244), drilling a hole, installing a fastener, connecting a part to an assembly, or removing a part.
Clause 20. The method of any of clauses 13-19, wherein the object (206) is selected from a group comprising a tool (306), a wall, a workpiece, a wing, a fuselage section, an engine, a building, an aircraft, and a vehicle.
Clause 21. An augmented reality system for visualizing a layup location (304) on a tool (306), the augmented reality system comprising:
   a computer system (218) operates to
   receive scan data (314) from using portable computing devices (214) on human operators (204) at different viewpoints (312) to the tool (306) to generate scan data (314);
   create a plurality of maps (320) of the tool (306) using the scan data (314) generated by the portable computing devices (214);
   combine the plurality of maps (320) to form a combined map (316) of the tool (306);
   identify task information (302) for the layup location (304) in a ply model (324); and
   send the task information (302) of the layup location (304) on the tool (306) to a portable computing device (238) in the portable computing devices (214), wherein the portable computing device (238) displays the task information (302) for the layup location (304) on the tool (306) on a live view (326) seen through a display device (328) in the portable computing device (238) that has been localized using the combined map (316) of the tool (306) and a ply model (324) of composite plies (308).
Clause 22. The augmented reality system of claim 21, wherein the augmented reality system further comprises the portable computing device (238) and wherein the portable computing device (238) identifies the layup location (304) in the ply model (324) of the composite plies (308); determines a location on the live view (326) for a number of guides (330) for a number of the composite plies (308) using the ply model (324) and the combined map (316); and displays the number of guides (330) for the number of the composite plies at the location on the live view (326) of the tool (306) seen through the display device (328) in the portable computing device (238) that has been localized, wherein the number of guides (330) is a guide for placement of the number of the composite plies (308) on the tool (306).
Clause 23. The augmented reality system of Clause 22, wherein portable computing device (238) displays at least one of a ply number, an instruction, an image, or video for placing the number of the composite plies (308).
Clause 24. The augmented reality system of any of clauses 21-23, wherein the scan data (314) comprises point clouds (318) and wherein in creating the combined map (316), the computer system (218) operates to:
   create a map from each point cloud in the point clouds (318) to form a plurality of maps (320); and
   combine the plurality of maps (320) to form the combined map (316).
Clause 25. The augmented reality system of any of clauses 21-24, wherein in combining the plurality of maps (320) to form the combined map (316), the computer system (218) operates to
   identify common reference points in the plurality of maps (320);
   combine the plurality of maps (320) using the common reference points, wherein the combined map (316) has increased accuracy from the plurality of maps (320) created from scan data (314) generated the different viewpoints (312) .
Clause 26. The augmented reality system of any of clauses 21-25, wherein the portable computing device (238) in the portable computing devices (214) is localized to the tool (306) using the combined map (316) and a simultaneous localization and mapping process (240).
Clause 27. The augmented reality system of any of clauses 21-26, wherein the task information (302) for the layup location (304) is a guide to layup a composite ply for at least one of fabricating a composite part (310) or reworking the composite part (310) on the tool (306).
Clause 28. The augmented reality system of any of clauses 21-27, wherein the tool (306) is selected from a group comprising a mandrel, a mold, a composite tool (306).
Clause 29. An augmented reality system for augmenting a live view (212) of a task location (244), the augmented reality system comprising:
   a portable computing device (238), wherein the portable computing device (238) is localized to an object and displays a visualization (242) of a task location (244) on the live view (212) of the object for performing a task using a model of the object and a combined map (234) of the object, wherein the combined map (234) is generated from scans of the object by portable computing devices (214) at different viewpoints (230) to the object.
Clause 30. The augmented reality system of Clause 29 further comprising:
   a computer system (218) in communication with the portable computing device (238), wherein the computer system (218) operates to
      receive scan data (228) from portable computing devices (214) including the portable computing device (238), wherein the scan data (228) is generated from scanning the object with the portable computing devices (214) on human operators (204) at different viewpoints (230) to the object.
      create point clouds (232) from the scan data (228) generated by the portable computing devices (214); and
   create a combined map (234) of the object using the point clouds (232).
Clause 31. The augmented reality system of Clause 30, wherein the scan data (228) is received in real-time.
Clause 32. The augmented reality system of Clause 30, wherein in creating the combined map (234) of the object using the point clouds (232), the computer system (218) creates a map from each point cloud in the point clouds (232) to form a plurality of maps (236) and combines the plurality of maps (236) to form the combined map (234).
Clause 33. The augmented reality system of Clause 29, wherein the task location (244) is for at least one of a composite ply, a part in an assembly in which the object (206) is the assembly, a plaque, or an applique.
Clause 34. The augmented reality system of any of clauses 29-33, wherein the task is selected from at least one of placing a composite ply, applying a plague, applying an applique, performing an inspection of the task location (244), drilling a hole, installing a fastener, connecting a part to an assembly, or removing a part.
Clause 35. The augmented reality system of any of clauses 29-34, wherein the object (206) is selected from a group comprising a tool (306), a wall, a workpiece, a wing, a fuselage section, an engine, a building, an aircraft, and a vehicle.

Many modifications and variations will be apparent to those of ordinary skill in the art. Further, different illustrative embodiments may provide different features as compared to other desirable embodiments. The embodiment or embodiments selected are chosen and described in order to best explain the principles of the embodiments, the practical application, and to enable others of ordinary skill in the art to understand the disclosure for various embodiments with various modifications as are suited to the particular use contemplated.

## Claims

1. A method for visualizing task information (302) for placing a composite ply (308) at a layup location (304) on a tool (306), the method comprising:
scanning a tool (306) using at least two portable computing devices (214) on human operators (204) at different viewpoints (312) to the tool (306) to generate scan data (314);
creating, by a computer system (218), point clouds (318) from the scan data (314) generated by the at least two portable computing devices (214);
creating, by the computer system (218), a combined map (316) of the tool (306) using the point clouds (318);
localizing a given portable computing device (238) in the at least two portable computing devices (214) to the tool (306) using the combined map (316) of the tool (306); and
displaying, by the given portable computing device (238), the task information (302) for the layup location (304) of the composite ply (308) on the tool (306) on a live view (326) seen through a display device (328) in the given portable computing device (238) that has been localized using the combined map (316) of the tool (306) and a ply model (324) of composite plies (308), wherein displayed task information (302) is used to augment the live view (326) of the tool (306).

2. The method of claim 1 further comprising:
placing a composite ply using a guide in the task information (302) displayed on the live view (326) of the layup location (304) on the tool (306), wherein the guide is used to place a number of the composite plies (308) on the tool (306).

3. The method of any preceding claim, wherein displaying the task information (302) for placing a composite ply (308) at the layup location (304) on the tool (306) comprises:
identifying the layup location (304) in the ply model (324) of the composite plies (308);
determining a layup location (304) on the live view (326) for a number of guides (330) for a number of the composite plies (308) using the ply model (324) and the combined map (316); and
displaying, by the portable computing device (238), the number of guides (330) for the number of the composite plies (308) at the layup location (304) on the live view (326) of the tool (306) seen through the display device (328) in in the portable computing device (238) that has been localized, wherein the number of guides (330) aids in placement of the number of the composite plies (308) on the tool (306).

4. The method of claim 3 further comprising:
displaying, by the portable computing device (238), a number of additional guides for the number of the composite plies (308) at the layup location (304) on the live view (326) of the tool (306) seen through the display device (328) in the portable computing device (238) that has been localized, wherein the number of additional guides illustrates a number of prior placements for the number of the composite plies (308) on the tool (306).

5. The method of claim 3, wherein displaying task information (302) for placing a composite ply (308) at the layup location (304) on the tool (306) further comprises:
displaying at least one of a ply number, an instruction, an image, or video for placing the number of the composite plies (308).

6. The method of any preceding claim, wherein creating the combined map (316) of the tool (306) from the point clouds (318) comprises:
creating a map from each point cloud in the point clouds (318) to form a plurality of maps (320); and
combining the plurality of maps (320) to form the combined map (316) of the tool (306).

7. The method of claim 6, wherein combining the plurality of maps (320) to form the combined map (316) comprises:
identifying common reference points in the plurality of maps (320); and
combining the plurality of maps (320) using the common reference points, wherein the combined map (316) has increased accuracy from the plurality of maps (320) created from scan data (314) generated from the different viewpoints (312).

8. The method of any preceding claim, wherein localizing a portable computing device (238) in the portable computing devices (214) to the tool (306) using the model comprises:
localizing the portable computing device (238) in the portable computing devices (214) to the tool (306) using the combined map (316) and a simultaneous localization and mapping process (240).

9. The method of any preceding claim, wherein the task information (302) for placing a composite ply (308) at the layup location (304) is a guide to layup a composite ply for at least one of fabricating a composite part (310) or reworking the composite part (310, and wherein the tool (306) is optionally selected from a group comprising a mandrel, a mold, a composite tool (306).

10. The method of any preceding claim, wherein the at least two portable computing devices (214) are selected from at least one of smart glasses (120,122, 406, 408), a mobile phone (118), a tablet computer (116), or a head mounted display, and wherein the portable computing devices (214) optionally scan the tool (306) using at least one of a laser scanner, a structured light three-dimensional scanner, or an infrared light scanner.

11. An augmented reality system for visualizing task information (302) for placing a composite ply (308) at a layup location (304) on a tool (306), the augmented reality system comprising:
a computer system (218) operates to
receive scan data (314) from using at least two portable computing devices (214) on human operators (204) at different viewpoints (312) to the tool (306) to generate scan data (314);
create a plurality of maps (320) of the tool (306) using the scan data (314) generated by the at least two portable computing devices (214);
combine the plurality of maps (320) to form a combined map (316) of the tool (306);
identify task information (302) for placing a composite ply (308) at the layup location (304) in a ply model (324); and
send the task information (302) to a given portable computing device (238) in the at least two portable computing devices (214), wherein the given portable computing device (238) displays the task information (302) for placing a composite ply (308) at the layup location (304) on the tool (306) on a live view (326) seen through a display device (328) in the given portable computing device (238) that has been localized using the combined map (316) of the tool (306) and a ply model (324) of composite plies (308).

12. The augmented reality system of claim 11, wherein the augmented reality system further comprises the given portable computing device (238) and wherein the given portable computing device (238) identifies the layup location (304) in the ply model (324) of the composite plies (308); determines a location on the live view (326) for a number of guides (330) for a number of the composite plies (308) using the ply model (324) and the combined map (316); and displays the number of guides (330) for the number of the composite plies at the location on the live view (326) of the tool (306) seen through the display device (328) in the portable computing device (238) that has been localized, wherein the number of guides (330) is a guide for placement of the number of the composite plies (308) on the tool (306, and wherein portable computing device (238) optionally displays at least one of a ply number, an instruction, an image, or video for placing the number of the composite plies (308).

13. The augmented reality system of any of claims 11-12, wherein the scan data (314) comprises point clouds (318) and wherein in creating the combined map (316), the computer system (218) operates to:
create a map from each point cloud in the point clouds (318) to form a plurality of maps (320); and
combine the plurality of maps (320) to form the combined map (316).

14. The augmented reality system of any of claims 11-13, wherein in combining the plurality of maps (320) to form the combined map (316), the computer system (218) operates to
identify common reference points in the plurality of maps (320);
combine the plurality of maps (320) using the common reference points, wherein the combined map (316) has increased accuracy from the plurality of maps (320) created from scan data (314) generated the different viewpoints (312) .

15. The augmented reality system of any of claims 11-14, wherein the given portable computing device (238) in the at least two portable computing devices (214) is localized to the tool (306) using the combined map (316) and a simultaneous localization and mapping process (240).
